# EUROPEAN PATENT SPECIFICATION

(11) **EP 4 702 243 B1**
(45) Date of publication and mention of the grant of the patent: **14.10.2026**
(21) Application number: 24737871.4
(22) Date of filing: 25.06.2024
(51) Int. Cl.: F03D 13/10, F03D 13/20, E04H 12/08, E04H 12/34

(54) **WIND TURBINE TOWER ASSEMBLY SYSTEM AND ASSEMBLY METHOD**
WINDTURBINENTURMMONTAGESYSTEM UND MONTAGEVERFAHREN
SYSTÈME D'ASSEMBLAGE DE TOUR D'ÉOLIENNE ET PROCÉDÉ D'ASSEMBLAGE

(30) Priority: 07.07.2023 EP 23184030
(43) Date of publication of application: 04.03.2026
(73) Proprietor: Siemens Gamesa Renewable Energy A/S, 7330 Brande (DK)
(72) Inventor: DOKIC, Adnan, 6091 Bjert (DK); WEYLER, Tim Roby, 6630 Roedding (DK)
(74) Representative: SGRE-Association
(86) International application number: PCT/EP2024/067720
(87) International publication number: WO 2025/011938

(56) References cited:
- WO-A1-2021/175400
- CN-A- 103 148 068
- US-A1- 2015 285 225
- US-A1- 2021 215 184

## Description

The present invention relates to a wind turbine tower assembly system for assembling a wind turbine tower. The wind turbine tower assembly system comprises an assembly support system for temporarily securing a wedge flange adapter to a first tower segment of the wind turbine tower. The invention further relates to a method for assembling a wind turbine tower.

Generally, when a wind turbine tower is assembled, tower segments of the wind turbine tower are successively stacked. Adjacent tower segments are fixed together by fixation means, such as bolts, nuts or the like. Within the invention, foundations and transition pieces are considered as elements of the wind turbine tower as well.

Due to installation tolerances of the tower segments, such as a foundation monopole, a transition piece and other tower segments for being installed above the foundation monopole or the transition piece, and with no adequate counter measures, it could occur that the tower is erected with a resulting inclination. The more tower segments are involved, such inclination could sum up to an increased total inclination.

To avoid excess inclination, a wedge flange adapter is used between two adjacent tower segments to eliminate the inclination due to manufacturing tolerances and to restore the final inclination of the wind turbine tower.

During the installation process of the wind turbine tower, the wedge flange adapter can be temporary secured to the lower tower segment that the wedge flange adapter is assigned to. For this purpose, fixation means, such as screws or bolts, are used. The documents US 2015 / 0 285 225 A1, WO 2021 175 400 A1 and US 2021 / 0 215 184 A1 disclose different methods and systems for the assembly of wind turbine towers.

Known methods and systems for temporarily securing a wedge flange adapter to a first tower segment of a wind turbine tower have the disadvantage that the assembly and disassembly of the fixation means to hold the wedge flange adapter in place is cumbersome and time consuming. Thus, the assembly costs of the wind turbine tower are relatively high.

It is therefore the object of the present invention to eliminate or at least partially eliminate the disadvantages described above in the case of a method and a system for temporarily securing a wedge flange adapter to a first tower segment of a wind turbine tower. In particular, it is the object of the present invention to create a method and a system which avoid excessive assembly and disassembly actions in a simple and inexpensive manner.

The above object is achieved by the claims. Accordingly, the problem is solved by a wind turbine tower assembly system with the features of the independent claim 1 and by a method for assembling a wind turbine tower with the features of the subordinate claim 13.

Further features and details of the invention emerge from the subclaims, the description and the drawings. Features and details that are described in connection with the wind turbine tower assembly system according to the invention naturally also apply in connection with the method according to the invention and vice versa, so that with regard to the disclosure of the individual aspects of the invention, reference is or can always be made to each other.

According to a first aspect of the invention, the object is achieved by a wind turbine tower assembly system for assembling a wind turbine tower. The wind turbine tower assembly system comprises a first tower segment of the wind turbine tower with a plurality of first flange bolt holes, a second tower segment of the wind turbine tower with a plurality of second flange bolt holes and a wedge flange adapter of the wind turbine tower with a plurality of intermediate flange bolt holes, wherein the wedge flange adapter is configured for being interposed between the first tower segment and the second tower segment for compensating manufacturing tolerances of the first tower segment and/or the second tower segment. The wind turbine tower assembly system further comprises an assembly support system for temporarily securing the wedge flange adapter to the first tower segment, wherein the assembly support system comprises an alignment pin for being inserted into a first flange bolt hole of the first tower segment in a way that a pin head section of the alignment pin protrudes from an upper end of the first flange bolt hole and a pin main section of the alignment pin is arranged within the first flange bolt hole. The pin head section is configured for being inserted into an intermediate flange bolt hole of the wedge flange adapter. According to the invention, the assembly support system comprises a holding device for being attached to the first tower segment for preventing the alignment pin from falling off the first flange bolt hole.

A wind turbine tower assembly system is a system for assembling a wind turbine tower. The first tower segment is configured to constitute a lower part of the wind turbine tower, the second tower segment is configured to constitute an upper part of the wind turbine tower, and the wedge flange adapter is configured to constitute an intermediate part of the wind turbine tower, contacting the first tower segment with a lower wedge side and the second tower with an upper wedge side.

The wedge flange adapter is configured such that the upper wedge side and the lower wedge side are mutually tilted to compensate installation tolerances of the first tower segment and/or the second tower segment.

The first flange bolt holes are distributed circumferentially about the first tower segment, **e.g.,** in a ring shaped first flange of the first tower segment. The second flange bolt holes are distributed circumferentially about the second tower segment, **e.g.,** in a ring shaped second flange of the first tower segment. The intermediate flange bolt holes are distributed circumferentially about the wedge flange adapter.

The first tower segment, the wedge flange adapter and the second tower segment are configured for being stacked in a way that the first flange bolt holes, the intermediate flange bolt holes and the second flange bolt holes are in line.

The purpose of the assembly support system is to provide a support to temporarily secure the wedge flange adapter on top, **e.g.,** of a first flange of the first tower segment of a wind turbine tower, **e.g.,** a transition piece of a wind turbine tower or a monopole foundation. Since the wedge flange adapter has a relatively heavy own weight, the support is basically only needed with respect to a horizontal relative movement of the wedge flange adapter with respect to the first tower segment.

For providing the support, the assembly support system comprises the alignment pin. Preferably, the assembly support system comprises a plurality of alignment pins, especially three alignment pins. Preferably, the assembly support system comprises three alignment pins and three holding devices. Thus, the alignment pins can be arranged at the first tower segment with a distance of 120°.

The alignment pin has a pin main section and a pin head section. Preferably, the diameter of the pin main section equals the diameter of the pin head section. Preferably, the pin has a constant diameter with chamfered ends. The diameter of the alignment pin is manufactured for form fit into the first flange bolt hole and the intermediate flange bolt hole, in order to provide a proper alignment and avoid a relative horizontal movement between the first tower segment and the wedge flange adapter. A possible diameter for the alignment pin is 70 mm. A preferred tolerance for the diameter of the alignment pin is +/- 0.5 mm.

Preferably, the pin main section is longer than the pin head section. A possible length of the alignment pin is between 160 mm and 200 mm, further preferred 180 mm.

Preferably, the alignment pin is made of metal, steel or the like in order to withstand high shear forces, e.g., during the tower landing process of a second tower segment onto the wedge flange adapter. A preferred material for the alignment pin is S355. Further preferred, the alignment pin is designed such that it could slip off the first flange bolt hole when the alignment pin is not supported by the holding device.

The holding device is configured for being, preferably temporarily, attached to the first tower segment, e.g., to a first flange of the first tower segment, a first wall of the first tower segment, the first flange bolt hole or the like. Moreover, the holding device is configured for providing support to the alignment pin to prevent the alignment pin from falling off the first flange bolt hole, e.g., from a lower end of the first flange bolt hole. For fixing the holding device to the first tower segment, a plurality of different means can be provided, such as glue, resin, tape or the like. Preferably, the holding device is configured for reducing a cross section of the first flange bolt hole in an assembled state. Preferably, the holding device is configured for fully covering the first flange bolt hole. Preferably, the holding device and the alignment pin are configured as separate parts.

The wind turbine tower assembly system according to the invention has the advantage over conventional wind turbine tower assembly systems that in a simple and inexpensive way, the processes of securing the alignment pins to the first flange bolt holes and removing the alignment pins from the first flange bolt holes are improved. Due to the holding device, the alignment pins are secured from falling off the first flange bolt holes. By simply removing the holding devices, the alignment pins can be easily taken off the first flange bolt holes without the need of an unscrewing process. Thus, an assembly duration and the assembly costs of the wind turbine tower can be reduced.

According to a preferred further development of the invention, a wind turbine tower assembly system can provide that the holding device comprises a magnet. With the magnet, in cooperation with the first tower segment, a holding force for holding the holding device in place is provided. Preferably, the magnet is arranged within a magnet housing of the holding device in order to prevent damages to the magnet. Alternatively of additionally, the magnet can be coated to protect the magnet from environmental influences. This has the advantage that in a simple and inexpensive way, the attachment process of the holding device to the first tower segment and the removal process of the holding device from the first tower segment is further facilitated.

According to a preferred embodiment of the invention, the alignment pin comprises a magnetic material or is made of a magnetic material. By these means, the alignment pin can be fixed to the holding device by the magnetic power of the holding device. This has the advantage that in a simple and inexpensive way, the attachment process of the holding device to the first tower segment and the removal process of the holding device from the first tower segment is further facilitated.

It is preferred according to the invention that the holding device is attached to the pin main section. This attachment can be configured as a permanent attachment or a temporary attachment. Moreover, the attachment can be such that a relative position of the alignment pin and the holding device is fixed or just restricted within predefined limits. Further preferred, this attachment is constituted by providing glue, a bolt, a nut, a chain, a wire or the like. Alternatively, the alignment pin can be welded onto the holding device. This has the advantage that in a simple and inexpensive way, the attachment process of the holding device to the first tower segment and the removal process of the holding device from the first tower segment is further facilitated.

More preferred, the holding device has an abutment face for preventing the holding device from being pushed through the first flange bolt hole. The abutment face is configured for contacting an area of the first tower segment, adjacent to the first flange bolt hole. Preferably, the abutment face has a planar surface. It can be provided that the abutment face has at least one extension which is greater than the diameter of the first flange bolt hole. Further preferred, the abutment face has extensions in two perpendicular directions which are greater than the diameter of the first flange bolt hole. This has the advantage that in a simple and inexpensive way, the attachment process of the holding device to the first tower segment and the removal process of the holding device from the first tower segment is further facilitated.

In a particularly preferred embodiment of the invention, the holding device comprises an engagement section for engaging the holding device for removing the holding device from the first tower segment. Within the present invention, an engagement section is considered as a section for a tool, a worker's hand or the like to engage with the holding device in order to apply a pulling force onto the holding device for removing the holding device from the first tower segment. Preferably, the engagement section is facing away from the alignment pin. The engagement section can comprise a ring, e.g., for attaching a hook, a wire, a rope or the like to the holding device. Alternatively or additionally, the engagement section can comprise a cylinder, e.g., coaxially aligned with the alignment pin, a grip, e.g., for being grabbed by a worker, or the like. This has the advantage that in a simple and inexpensive way, the attachment process of the holding device to the first tower segment and the removal process of the holding device from the first tower segment is further facilitated.

Preferably, the holding device comprises a clamping section for being inserted into the first flange bolt hole for clamping the holding device to the first tower segment. Preferably, the clamping section is configured for being compressed and for applying a pressure force due to expansion in a radial direction within the first flange bolt hole. The clamping section can comprise a rubber element, e.g., sealing lips, a spring element, e.g., a metal or rubber spring element, burlings, ribs etc. The clamping section can be arranged at the alignment pin, e.g., the pin main section. This has the advantage that in a simple and inexpensive way, the attachment process of the holding device to the first tower segment and the removal process of the holding device from the first tower segment is further facilitated.

Particularly preferred, the pin head section of the alignment pin comprises an alignment chamfer. The alignment chamfer is configured such that the diameter of the pin head section decreases at an end of the alignment pin, facing away from the pin main section. The chamfer can have surrounding edges, roundings or the like. With the chamfer, the alignment process of the wedge flange adapter with the first tower segment can be improved. This has the advantage that in a simple and inexpensive way, the assembly process of the wind turbine tower can be further improved.

It is preferred according to the invention that the pin head section of the alignment pin comprises a threaded portion. In this case, it is preferred that the pin head section is long enough to protrude from second flange bolt holes of a second tower segment when the wedge flange adapter is sandwiched between the first tower segment and the second tower segment. Thus, the alignment pin can be used as a bolt for fixing the second tower segment to the first tower segment and the wedge flange adapter in cooperation with a nut. By these means, a removal process for the alignment pin can be omitted. This has the advantage that in a simple and inexpensive way, the assembly process of the wind turbine tower can be further improved.

Preferably, a part of the pin main section of the alignment pin facing away from the pin head section has an increased diameter with respect to the rest of the pin main section for preventing the alignment pin from being pushed through the first flange bolt hole. This means that the pin main section has at least two different diameters. Preferably, the diameter of the pin main section next to the pin head section equals the diameter of the pin head section. The diameter of the pin main section facing away from the pin head section is preferably larger than the diameter of the first flange bolt hole. Thus, an inserting movement of the alignment pin into the first flange bolt hole is limited by the enlarged diameter of the part of the pin main section by form fit. This has the advantage that in a simple and inexpensive way, the inserting action of the alignment pin and, therefore, the assembly process of the wind turbine tower can be further improved.

It is preferred that the first tower segment is configured as a transition piece of the wind turbine tower. The transition piece constitutes a lower part of the wind turbine tower. Therefore, manufacturing tolerances of this part are of a special importance concerning stability of the wind turbine tower.

Preferably, the pin head section is configured to end, in an assembled state, within the limits of the intermediate flange bolt hole. In other words, when the wedge flange adapter is stacked on the first tower segment, when the second tower segment is stacked on the wedge flange adapter and the alignment pin is fully inserted into the first flange bolt hole, the pin head section does not protrude into the second flange bolt hole. This has the advantage that in a simple and inexpensive way, the assembly process of the wind turbine tower can be further improved.

According to a second aspect of the invention, the object is achieved by a method for assembling a wind turbine tower. The method comprises:
- Providing a wind turbine tower assembly system according to the invention,
- inserting a plurality of alignment pins into the first flange bolt holes in a way that the pin head sections protrude from the first flange bolt holes,
- attaching the holding devices to the first tower segment for securing the alignment pins to the first tower segment from falling off,
- arranging the wedge flange adapter onto the first tower segment in a way that the pin head sections protrude into the intermediate flange bolt holes,
- arranging the second tower segment onto the wedge flange adapter and
- fixing the second tower segment to the first tower segment and the wedge flange adapter by fixation means.

Preferably, the wind turbine tower system is provided such that the first tower segment is arranged at an assembly area. The first tower segment comprises a plurality of first flange bolt holes. It is preferred that the flange bolt holes are arranged at a first flange of the first tower segment, preferably equally spaced. Preferably, the first tower segment is a transition piece.

The alignment pins of the wind turbine tower system are inserted into the first flange bolt holes. Preferably, three alignment pins are provided. Further preferred, the alignment pins are inserted with a distance of 120°.

To secure the alignment pins into the first flange bolt holes, the holding devices are attached to the first tower segment. Preferably, the holding devices comprise a magnet for sticking to the first tower segment by magnetic force. The holding devices are arranged at the first tower segment such that the alignment pins are prevented from falling off the first flange bolt holes.

The wedge flange adapter is arranged onto the first tower segment in a way that the pin head sections protrude into the intermediate flange bolt holes. The inserting of the alignment pins and securing of the alignment pins can be performed before, during or after arranging the wedge flange adapter onto the first tower segment.

After the wedge tower segment is secured to the first tower segment by the alignment pins, the second tower segment is arranged onto the wedge flange adapter. The second tower segment is arranged onto the wedge flange adapter such that the second flange bolt holes are in line with the first flange bolt holes and the intermediate flange bolt holes.

Finally, the second tower segment is fixed to the first tower segment and the wedge flange adapter by fixation means. Preferred fixation means are bolts and nuts.

The method for assembling a wind turbine tower according to the invention has all the advantages that have already been described for a wind turbine tower assembly system according to the first aspect of the invention. Accordingly, the method for assembling a wind turbine tower according to the invention has the advantage over conventional assembly methods that in a simple and inexpensive way, the processes of securing the alignment pins to the first flange bolt holes and removing the alignment pins from the first flange bolt holes are improved.

Due to the holding device, the alignment pins are secured from falling off the first flange bolt holes. By simply removing the holding devices, the alignment pins can be easily taken off the first flange bolt holes without the need of an unscrewing process. Thus, an assembly duration and the assembly costs of the wind turbine tower can be reduced. Preferably, the assembly support system is removed from the first tower segment when the second tower segment is at least partly fixed to the first tower segment and the wedge flange adapter by the fixation means. Preferably, the removal is performed by removing the holding device first, e.g., by exerting a pulling force onto the holding device, and removing the alignment pins from the bores afterwards, e.g., by a hammer and a bolt with a smaller diameter than the alignment pin. Alternatively, the holding device and the alignment pin can be removed simultaneously, by pulling the holding device. Both alternatives provide for a fast and easy removal of the assembly support system from the first tower segment. Thus, the fixation of the first tower segment to the wedge flange adapter and the second tower segment can be enhanced by additional fixation means. This has the advantage that in a simple and inexpensive way, the stability of the wind turbine tower can be further improved.

Further advantages, features and details of the invention unfold from the following description, in which by reference to drawings, working examples of the present invention are described in detail. In the drawings:
Figure 1 shows a schematic detail view of a wind turbine tower,
Figure 2 shows a schematic top view of a first tower segment,
Figure 3 shows a schematic sectional side view of a wind turbine tower assembly system at a first assembly state,
Figure 4 shows the wind turbine tower assembly system of fig. 3 at a third assembly state,
Figure 5 shows an alternative wind turbine tower assembly system at the third assembly state,
Figure 6 shows an alternative wind turbine tower assembly system at a second assembly state,
Figure 7 shows an alternative wind turbine tower assembly system at the second assembly state and
Figure 8 shows a schematic flow chart of the method according to a preferred embodiment of the invention.

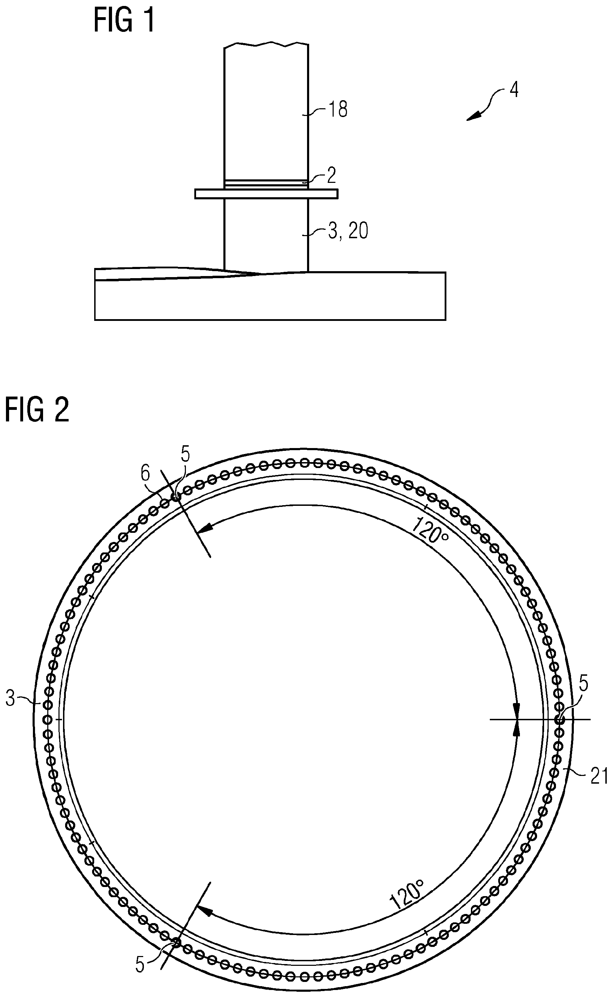

Elements with the same function and effectiveness are denoted each in figs. 1 - 8 with the same reference numbers.

In fig. 1, a wind turbine tower 4 is shown in a schematic detail view. The wind turbine tower 4 comprises a lower first tower segment 3 with a wedge flange adapter 2 on top. A second tower segment 18 is arranged on top of the wedge flange adapter **2.** The first tower segment 3 is configured as a transition piece 20.

In fig. 2, a schematic top view of a first tower segment 3 is shown. The first tower segment 3 comprises a ring shaped first flange 21 with a plurality of first flange bolt holes 6 equally distributed along the first flange 21. In three of the first flange bolt holes 6 with a mutual distance of 120°, a first alignment pin 5 is arranged.

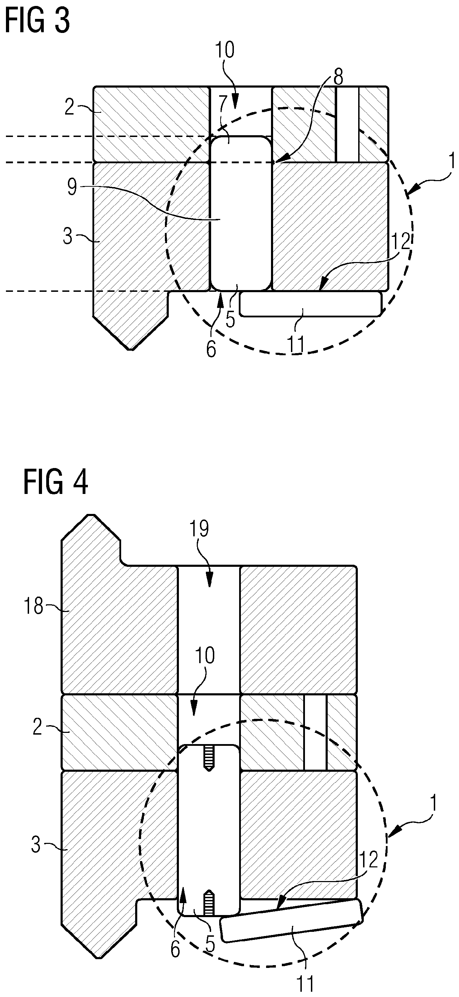

In fig. 3, a schematic sectional side view of a wind turbine tower assembly system 17 is shown at a first assembly state. In the first assembly state, an assembly support system 1 according to the invention is arranged at the first tower segment 3. A pin main section 9 of the alignment pin 5 is arranged within the first flange bolt hole 6, and a pin head section 7 of the alignment pin 5 protrudes from an upper end 8 of the first flange bolt hole 6 into an intermediate flange bolt hole 10 of a wedge flange adapter 2.

For securing the alignment pin 5 to the first tower segment 3, a holding device 11 which comprises a magnet is fixed to the first tower segment 3 by magnetic force. An abutment face 12 of the holding device 11 contacts the first tower segment 3 and partly closes a lower opening of the first flange bolt hole 6. Thus, the wedge flange adapter 2 is secured to the first tower segment 3.

In fig. 4, the wind turbine tower assembly system 17 of fig. 3 is shown at a third assembly state. In the third assembly state, the second tower segment 18 is arranged on top of the wedge flange adapter 2. Moreover, the first tower segment 3, the second tower segment 18 and the wedge flange adapter 2 are mutually fixed by not shown fixation means. The alignment pin 5 does not protrude into a second flange bolt hole 19 of the second tower segment 18.

The holding device 11 is partly removed from the first tower segment 3. An outer diameter of the alignment pin 5 is slightly less than the diameters of the first flange bolt hole 6 and the intermediate flange bolt hole 10. Thus, the alignment pin 5 starts sliding off the first flange bolt hole 6. Preferably, the holding device 11 is secured to the alignment pin 5 by a not shown wire, rope or the like.

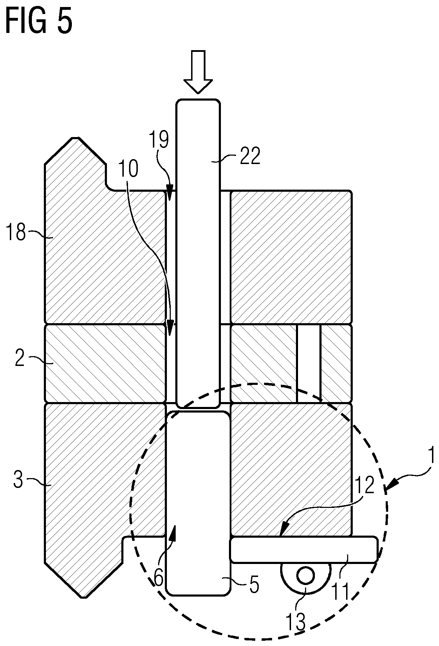

In fig. 5, an alternative wind turbine tower assembly system 17 is shown at a third assembly state. In this embodiment of the assembly support system 1, the alignment pin 5 has a tighter fitting in the first flange bolt hole 6 which provides enough friction to hold the alignment pin 5 inside the first flange bolt hole 6, even with the holding device 11 releasing the first flange bolt hole 6. For better engaging the holding device 11, the holding device comprises an engagement section 13. In this embodiment, the engagement section 13 can be used for attaching a not illustrated chain for preventing the holding device 11 from falling down, e.g., during the application or removal process of the holding device 11. The chain can be connected to the alignment pin 5. For removing the alignment pin 5 from the first flange bolt hole 6, a rod 22 is inserted into the second flange bolt hole 19 for exerting a pushing force in a downward direction onto the alignment pin 5.

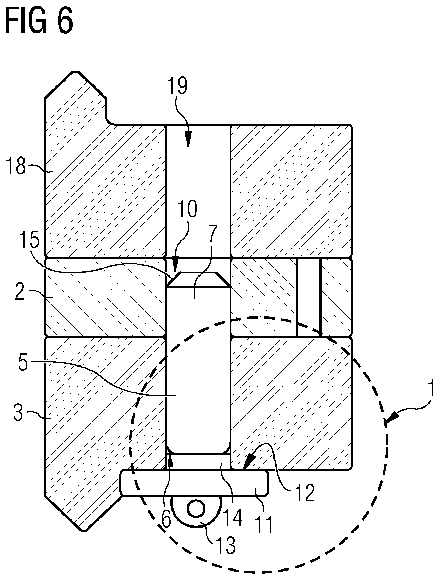

In fig. 6, an alternative wind turbine tower assembly system 17 is shown at a second assembly state. In the second assembly state, the second tower segment 18 is arranged on top of the wedge flange adapter 2, and the alignment pin 5 is secured within the first flange bolt hole 6 by the holding device 11. In this embodiment of the assembly support system 1, the holding device 11 has a clamping section 14 which is inserted into the first flange bolt hole 6. By the clamping force of the clamping section 14, the holding device 11 is fixed to the first tower segment 3. Furthermore, the pin head section 7 of the alignment pin 5 comprises an alignment chamfer 15 for improving the alignment of the wedge flange adapter 2 with the first tower segment 3.

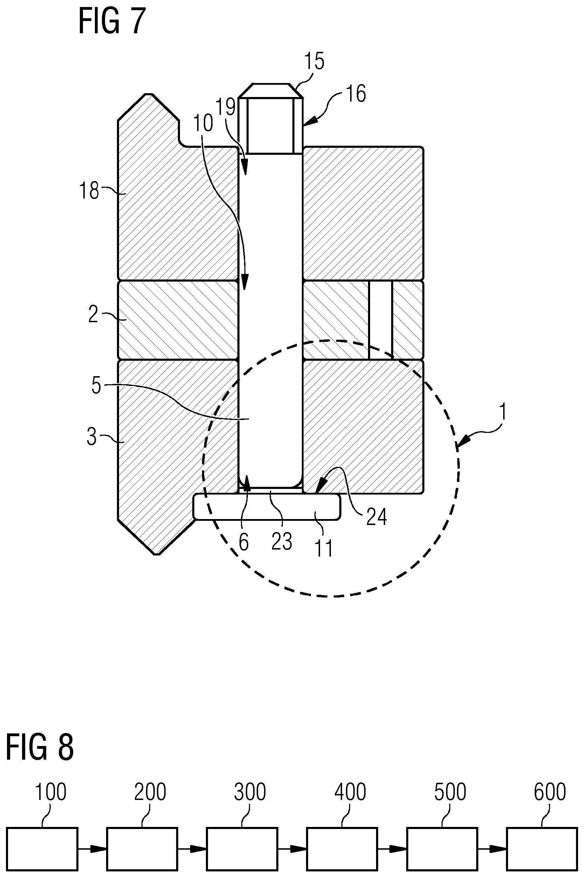

In fig. 7, an alternative wind turbine tower assembly system 17 is shown at the second assembly state. In this embodiment of the assembly support system 1, a threaded portion 16 of the alignment pin 5 protrudes from the second flange bolt hole 19 for engaging with a not shown nut.

Furthermore, the holding device 11 is fixed to the alignment pin 5 by a weld 23 and fixed to the first tower segment 3 by glue 24.

In fig. 8, a schematic flow chart of the method according to a preferred embodiment of the invention is shown. In a first action 100, a wind turbine tower assembly system 17 according to the invention is provided. In a second action 200, a plurality of alignment pins 5 is inserted into the first flange bolt holes 6 in a way that the pin head sections 7 protrude from the first flange bolt holes 6. In a third action 300, the holding devices 11 are attached to the first tower segment 3 for securing the alignment pins 5 to the first tower segment 3 from falling off. Preferably, the attachment is realized by magnets of the holding devices 11.

In a fourth action 400, the wedge flange adapter 2 is arranged onto the first tower segment 3 in a way that the pin head sections 7 protrude into the intermediate flange bolt holes 10 of the wedge flange adapter 2. In a fifth action 500, the second tower segment 18 is arranged onto the wedge flange adapter 2. In a sixth action 600, the second tower segment 18 is fixed to the first tower segment 3 and the wedge flange adapter 2 by fixation means, such as screws, bolts, nuts or the like.

## Claims

1. Wind turbine tower assembly system (17) for assembling a wind turbine tower (4), comprising a first tower segment (3) of the wind turbine tower (4) with a plurality of first flange bolt holes (6), a second tower segment (18) of the wind turbine tower (4) with a plurality of second flange bolt holes (19), a wedge flange adapter (2) of the wind turbine tower (4) with a plurality of intermediate flange bolt holes (10), wherein the wedge flange adapter (2) is configured for being interposed between the first tower segment (3) and the second tower segment (18) for compensating manufacturing tolerances of the first tower segment (3) and/or the second tower segment (18), and an assembly support system (1) for temporarily securing the wedge flange adapter (2) to the first tower segment (3), wherein the assembly support system (1) comprises an alignment pin (5) for being inserted into a first flange bolt hole (6) of the first tower segment (3) in a way that a pin head section (7) of the alignment pin (5) protrudes from an upper end (8) of the first flange bolt hole (6) and a pin main section (9) of the alignment pin (5) is arranged within the first flange bolt hole (6), wherein the pin head section (7) is configured for being inserted into an intermediate flange bolt hole (10) of the wedge flange adapter (2), wherein the assembly support system (1) comprises a holding device (11) for being attached to the first tower segment (3) for preventing the alignment pin (5) from falling off the first flange bolt hole (6).

2. Wind turbine tower assembly system (17) according to claim 1,
**characterized in**
**that** the holding device (11) comprises a magnet.

3. Wind turbine tower assembly system (17) according to claim 1 or **2,**
**characterized in**
**that** the alignment pin (5) comprises a magnetic material or is made of a magnetic material.

4. Wind turbine tower assembly system (17) according to any of the previous claims,
**characterized in**
**that** the holding device (11) is attached to the pin main section (9).

5. Wind turbine tower assembly system (17) according to any of the previous claims,
**characterized in**
**that** the holding device (11) has an abutment face (12) for preventing the holding device (11) from being pushed through the first flange bolt hole (6).

6. Wind turbine tower assembly system (17) according to any of the previous claims,
**characterized in**
**that** the holding device (11) comprises an engagement section (13) for engaging the holding device (11) for removing the holding device (11) from the first tower segment (3).

7. Wind turbine tower assembly system (17) according to any of the previous claims,
**characterized in**
**that** the holding device (11) comprises a clamping section (14) for being inserted into the first flange bolt hole (6) for clamping the holding device (11) to the first tower segment (3).

8. Wind turbine tower assembly system (17) according to any of the previous claims,
**characterized in**
**that** the pin head section (7) of the alignment pin (5) comprises an alignment chamfer (15).

9. Wind turbine tower assembly system (17) according to any of the previous claims,
**characterized in**
**that** the pin head section (7) of the alignment pin (5) comprises a threaded portion (16).

10. Wind turbine tower assembly system (17) according to any of the previous claims,
**characterized in**
**that** a part of the pin main section (9) of the alignment pin (5) facing away from the pin head section (7) has an increased diameter with respect to the rest of the pin main section (9) for preventing the alignment pin (5) from being pushed through the first flange bolt hole (6).

11. Wind turbine tower assembly system (17) according to any of the previous claims,
**characterized in**
**that** the first tower segment (3) is configured as a transition piece (20) of the wind turbine tower (4).

12. Wind turbine tower assembly system (17) according to any of the previous claims,
**characterized in**
**that** the pin head section (7) is configured to end, in an assembled state, within the limits of the intermediate flange bolt hole (10).

13. Method for assembling a wind turbine tower (4), the method comprising:
- Providing a wind turbine tower assembly system (17) according to any of the previous claims,
- inserting a plurality of alignment pins (5) into the first flange bolt holes (6) in a way that the pin head sections (7) protrude from the first flange bolt holes (6),
- attaching the holding devices (11) to the first tower segment (3) for securing the alignment pins (5) to the first tower segment (3) from falling off,
- arranging the wedge flange adapter (2) onto the first tower segment (3) in a way that the pin head sections (7) protrude into the intermediate flange bolt holes (10),
- arranging the second tower segment (18) onto the wedge flange adapter (2) and
- fixing the second tower segment (18) to the first tower segment (3) and the wedge flange adapter (2) by fixation means.

14. Method according to claim 13,
**characterized in**
**that** the assembly support system (1) is removed from the first tower segment (3) when the second tower segment (18) is at least partly fixed to the first tower segment (3) and the wedge flange adapter (2) by the fixation means.

## Patentansprüche

1. Windturbinenturmmontagesystem (17) zum Montieren eines Windturbinenturms (4), umfassend ein erstes Turmsegment (3) des Windturbinenturms (4) mit einer Vielzahl von ersten Flanschbolzenlöchern (6), ein zweites Turmsegment (18) des Windturbinenturms (4) mit einer Vielzahl von zweiten Flanschbolzenlöchern (19), einen Keilflanschadapter (2) des Windturbinenturms (4) mit einer Vielzahl von Zwischenflanschbolzenlöchern (10), wobei der Keilflanschadapter (2) dazu konfiguriert ist, zwischen dem ersten Turmsegment (3) und dem zweiten Turmsegment (18) positioniert zu sein, um Herstellungstoleranzen des ersten Turmsegments (3) und/oder des zweiten Turmsegments (18) auszugleichen, und ein Montageunterstützungssystem (1) zum temporären Sichern des Keilflanschadapters (2) an dem ersten Turmsegment (3), wobei das Montageunterstützungssystem (1) einen Ausrichtungsstift (5) zum Einführen in ein erstes Flanschbolzenloch (6) des ersten Turmsegments (3) auf eine Weise umfasst, dass ein Stiftkopfabschnitt (7) des Ausrichtungsstifts (5) von einem oberen Ende (8) des ersten Flanschbolzenlochs (6) hervorsteht und ein Stifthauptabschnitt (9) des Ausrichtungsstifts (5) innerhalb des ersten Flanschbolzenlochs (6) angeordnet ist, wobei der Stiftkopfabschnitt (7) dazu konfiguriert ist, in ein Zwischenflanschbolzenloch (10) des Keilflanschadapters (2) eingeführt zu werden, wobei
das Montageunterstützungssystem (1) eine Haltevorrichtung (11) umfasst, um an dem ersten Turmsegment (3) angebracht zu sein, um zu verhindern, dass der Ausrichtungsstift (5) aus dem ersten Flanschbolzenloch (6) fällt.

2. Windturbinenturmmontagesystem (17) nach Anspruch 1,
**dadurch gekennzeichnet,**
**dass** die Haltevorrichtung (11) einen Magneten umfasst.

3. Windturbinenturmmontagesystem (17) nach Anspruch 1 oder 2,
**dadurch gekennzeichnet,**
**dass** der Ausrichtungsstift (5) ein magnetisches Material umfasst oder aus einem magnetischen Material hergestellt ist.

4. Windturbinenturmmontagesystem (17) nach einem der vorhergehenden Ansprüche,
**dadurch gekennzeichnet,**
**dass** die Haltevorrichtung (11) an dem Stifthauptabschnitt (9) angebracht ist.

5. Windturbinenturmmontagesystem (17) nach einem der vorhergehenden Ansprüche,
**dadurch gekennzeichnet,**
**dass** die Haltevorrichtung (11) eine Auflagefläche (12) aufweist, um zu verhindern, dass die Haltevorrichtung (11) durch das erste Flanschbolzenloch (6) gedrückt wird.

6. Windturbinenturmmontagesystem (17) nach einem der vorhergehenden Ansprüche,
**dadurch gekennzeichnet,**
**dass** die Haltevorrichtung (11) einen Eingriffsabschnitt (13) zum Ineingriffnehmen der Haltevorrichtung (11) zum Entfernen der Haltevorrichtung (11) aus dem ersten Turmsegment (3) umfasst.

7. Windturbinenturmmontagesystem (17) nach einem der vorhergehenden Ansprüche,
**dadurch gekennzeichnet,**
**dass** die Haltevorrichtung (11) einen Klemmabschnitt (14) zum Einführen in das erste Flanschbolzenloch (6) zum Festklemmen der Haltevorrichtung (11) an dem ersten Turmsegment (3) umfasst.

8. Windturbinenturmmontagesystem (17) nach einem der vorhergehenden Ansprüche,
**dadurch gekennzeichnet,**
**dass** der Stiftkopfabschnitt (7) des Ausrichtungsstifts (5) eine Ausrichtungsfase (15) umfasst.

9. Windturbinenturmmontagesystem (17) nach einem der vorhergehenden Ansprüche,
**dadurch gekennzeichnet,**
**dass** der Stiftkopfabschnitt (7) des Ausrichtungsstifts (5) einen Gewindebereich (16) umfasst.

10. Windturbinenturmmontagesystem (17) nach einem der vorhergehenden Ansprüche,
**dadurch gekennzeichnet,**
**dass** ein Teil des Stifthauptabschnitts (9) des Ausrichtungsstifts (5), der von dem Stiftkopfabschnitt (7) weg gewandt ist, einen vergrößerten Durchmesser in Bezug auf den Rest des Stifthauptabschnitts (9) aufweist, um zu verhindern, dass der Ausrichtungsstift (5) durch das erste Flanschbolzenloch (6) gedrückt wird.

11. Windturbinenturmmontagesystem (17) nach einem der vorhergehenden Ansprüche,
**dadurch gekennzeichnet,**
**dass** das erste Turmsegment (3) als Übergangsstück (20) des Windturbinenturms (4) konfiguriert ist.

12. Windturbinenturmmontagesystem (17) nach einem der vorhergehenden Ansprüche,
**dadurch gekennzeichnet,**
**dass** der Stiftkopfabschnitt (7) dazu konfiguriert ist, in einem montierten Zustand innerhalb der Grenzen des Zwischenflanschbolzenlochs (10) zu enden.

13. Verfahren zum Montieren eines Windturbinenturms (4), wobei das Verfahren Folgendes umfasst:
- Bereitstellen eines Windturbinenturmmontagesystems (17) nach einem der vorhergehenden Ansprüche,
- Einsetzen einer Vielzahl von Ausrichtungsstiften (5) in die ersten Flanschbolzenlöcher (6) auf eine Weise, dass die Stiftkopfabschnitte (7) von den ersten Flanschbolzenlöchern (6) hervorstehen,
- Anbringen der Haltevorrichtungen (11) an dem ersten Turmsegment (3) zum Sichern der Ausrichtungsstifte (5) an dem ersten Turmsegment (3) vor dem Herausfallen,
- Anordnen des Keilflanschadapters (2) auf dem ersten Turmsegment (3) auf eine Weise, dass die Stiftkopfabschnitte (7) in die Zwischenflanschbolzenlöcher (10) hervorstehen,
- Anordnen des zweiten Turmsegments (18) auf dem Keilflanschadapter (2) und
- Fixieren des zweiten Turmsegments (18) an dem ersten Turmsegment (3) und dem Keilflanschadapter (2) durch Fixierungsmittel.

14. Verfahren nach Anspruch 13,
**dadurch gekennzeichnet,**
**dass** das Montageunterstützungssystem (1) aus dem ersten Turmsegment (3) entfernt wird, wenn das zweite Turmsegment (18) durch die Fixierungsmittel mindestens teilweise an dem ersten Turmsegment (3) und dem Keilflanschadapter (2) fixiert ist.

## Revendications

1. Système d'assemblage de tour d'éolienne (17) pour l'assemblage d'une tour d'éolienne (4), comprenant un premier segment de tour (3) de la tour d'éolienne (4) avec une pluralité de premiers trous pour boulons de bride (6), un deuxième segment de tour (18) de la tour d'éolienne (4) avec une pluralité de deuxièmes trous pour boulons de bride (19), un adaptateur de bride en coin (2) de la tour d'éolienne (4) avec une pluralité de trous pour boulons de bride intermédiaires (10), dans lequel l'adaptateur de bride en coin (2) est configuré pour être interposé entre le premier segment de tour (3) et le deuxième segment de tour (18) pour compenser les tolérances de fabrication du premier segment de tour (3) et/ou du deuxième segment de tour (18), et un système de support d'assemblage (1) pour fixer temporairement l'adaptateur de bride en coin (2) au premier segment de tour (3), dans lequel le système de support d'assemblage (1) comprend une goupille d'alignement (5) destinée à être insérée dans un premier trou pour boulons de bride (6) du premier segment de tour (3) de sorte qu'une section de tête de goupille (7) de la goupille d'alignement (5) fasse saillie à partir d'une extrémité supérieure (8) du premier trou pour boulons de bride (6) et qu'une section principale de goupille (9) de la goupille d'alignement (5) soit agencée à l'intérieur du premier trou pour boulons de bride (6), dans lequel la section de tête de goupille (7) est configurée pour être insérée dans un trou pour boulons de bride intermédiaire (10) de l'adaptateur de bride en coin (2), dans lequel
le système de support d'assemblage (1) comprend un dispositif de maintien (11) destiné à être fixé au premier segment de tour (3) pour empêcher la goupille d'alignement (5) de tomber du premier trou pour boulons de bride (6).

2. Système d'assemblage de tour d'éolienne (17) selon la revendication 1,
**caractérisé en ce que**
le dispositif de maintien (11) comprend un aimant.

3. Système d'assemblage de tour d'éolienne (17) selon la revendication 1 ou 2,
**caractérisé en ce que**
la goupille d'alignement (5) comprend un matériau magnétique ou est constituée d'un matériau magnétique.

4. Système d'assemblage de tour d'éolienne (17) selon l'une quelconque des revendications précédentes,
**caractérisé en ce que**
le dispositif de maintien (11) est fixé à la section principale de goupille (9).

5. Système d'assemblage de tour d'éolienne (17) selon l'une quelconque des revendications précédentes,
**caractérisé en ce que**
le dispositif de maintien (11) a une face de butée (12) pour empêcher le dispositif de maintien (11) d'être poussé à travers le premier trou pour boulons de bride (6).

6. Système d'assemblage de tour d'éolienne (17) selon l'une quelconque des revendications précédentes,
**caractérisé en ce que**
le dispositif de maintien (11) comprend une section de mise en prise (13) pour venir en prise avec le dispositif de maintien (11) pour retirer le dispositif de maintien (11) à partir du premier segment de tour (3).

7. Système d'assemblage de tour d'éolienne (17) selon l'une quelconque des revendications précédentes,
**caractérisé en ce que**
le dispositif de maintien (11) comprend une section de serrage (14) destinée à être insérée dans le premier trou pour boulons de bride (6) pour serrer le dispositif de maintien (11) sur le premier segment de tour (3).

8. Système d'assemblage de tour d'éolienne (17) selon l'une quelconque des revendications précédentes,
**caractérisé en ce que**
la section de tête de goupille (7) de la goupille d'alignement (5) comprend un chanfrein d'alignement (15).

9. Système d'assemblage de tour d'éolienne (17) selon l'une quelconque des revendications précédentes,
**caractérisé en ce que**
la section de tête de goupille (7) de la goupille d'alignement (5) comprend une portion filetée (16).

10. Système d'assemblage de tour d'éolienne (17) selon l'une quelconque des revendications précédentes,
**caractérisé en ce que**
une partie de la section principale de goupille (9) de la goupille d'alignement (5) orientée à l'opposé de la section de tête de goupille (7) présente un diamètre élargi par rapport au reste de la section principale de goupille (9) pour empêcher la goupille d'alignement (5) d'être poussée à travers le premier trou pour boulons de bride (6).

11. Système d'assemblage de tour d'éolienne (17) selon l'une quelconque des revendications précédentes,
**caractérisé en ce que**
le premier segment de tour (3) est configuré comme une pièce de transition (20) de la tour d'éolienne (4).

12. Système d'assemblage de tour d'éolienne (17) selon l'une quelconque des revendications précédentes,
**caractérisé en ce que**
la section de tête de goupille (7) est configurée pour s'arrêter, dans un état assemblé, dans les limites du trou pour boulons de bride intermédiaire (10).

13. Procédé d'assemblage d'une tour d'éolienne (4), le procédé comprenant :
- la fourniture d'un système d'assemblage de tour d'éolienne (17) selon l'une quelconque des revendications précédentes,
- l'insertion d'une pluralité de goupilles d'alignement (5) dans les premiers trous pour boulons de bride (6) de sorte que les sections de tête de goupille (7) fassent saillie à partir des premiers trous pour boulons de bride (6),
- la fixation des dispositifs de maintien (11) au premier segment de tour (3) pour fixer les goupilles d'alignement (5) au premier segment de tour (3) afin de les empêcher de tomber,
- l'agencement de l'adaptateur de bride en coin (2) sur le premier segment de tour (3) de sorte que les sections de tête de goupille (7) fassent saillie dans les trous pour boulons de bride intermédiaires (10),
- l'agencement du deuxième segment de tour (18) sur l'adaptateur de bride en coin (2) et
- la fixation du deuxième segment de tour (18) au premier segment de tour (3) et à l'adaptateur de bride en coin (2) par des moyens de fixation.

14. Procédé selon la revendication 13,
**caractérisé en ce que**
le système de support d'assemblage (1) est retiré à partir du premier segment de tour (3) lorsque le deuxième segment de tour (18) est au moins en partie fixé au premier segment de tour (3) et à l'adaptateur de bride en coin (2) par les moyens de fixation.
